# EUROPEAN PATENT SPECIFICATION

(11) **EP 2 282 908 B1**
(45) Date of publication and mention of the grant of the patent: **03.10.2012**
(21) Application number: 09739067.8
(22) Date of filing: 26.02.2009
(51) Int. Cl.: B60K 11/08, F01P 1/06

(54) **ARRANGEMENT FOR COOLING AN AREA BEHIND A VEHICLE ENGINE**
ANORDNUNG ZUR KÜHLUNG EINES BEREICHS HINTER EINEM FAHRZEUGMOTOR
AMÉNAGEMENT DE REFROIDISSEMENT D UNE ZONE DERRIÈRE UN MOTEUR DE VÉHICULE

(30) Priority: 29.04.2008 SE 0800968
(43) Date of publication of application: 16.02.2011
(73) Proprietor: Scania CV AB, 151 87 Södertälje (SE)
(72) Inventor: KYLEFORS, Björn, S-155 91 Nykvarn (SE)
(86) International application number: PCT/SE2009/050212
(87) International publication number: WO 2009/134186

(56) References cited:
- WO-A1-2006/074779
- WO-A1-2006/074779
- JP-A- 2000 280 762
- JP-A- 2000 280 762
- US-A- 4 081 050
- US-A- 5 042 603

## Description

### TECHNICAL FIELD

The invention relates to a device for cooling a region behind a vehicle engine below or adjacent to a rear side of a cab of a truck.

### BACKGROUND

Components situated below or adjacent to a lower rear side of a truck cab, such as gearbox and cab suspension, are often subject to high temperatures from the vehicle's engine, possibly including further heat-generating turbo units. This applies particularly to trucks with wide engines, e.g. V8 engines, which during operation may create at their rear side a stationary vortex of heated air which may be directly harmful to certain components. It is therefore desirable to be able to cool the region behind the engine and thereby save costs by not having to use expensive materials resistant to high temperatures for such items as rubber and plastic parts, gaskets and electronic components.

WO 2006/074779, which describes a device according to the preamble of claim 1, describes a cooling air conduit for a combustion engine of a semitrailer that is fitted with a front driver's cab, the combustion engine being located in an engine compartment. The air cooling circuit has air inlet ducts which extends substantially transverse or perpendicular to the cooling air streams in the engine compartment. The orifices of these ducts extending to the cooling air streams, and thereby influenced by a suction based on the venturi output which is achieved by the flow velocity of the cooling air streams.

### SUMMARY OF THE INVENTION

An object of the invention is to provide a separate cooling device which can in a simple manner cool the region behind the vehicle engine.

This is achieved by the features indicated in the claims set out below.

According to the invention, the device comprises a duct for leading outside air into said region, which duct extends rearwards and inwards towards said region from an inlet aperture at one side of the vehicle. This makes it possible for the heated air behind the engine to be mixed with inflowing cooler outside air which absorbs heat from vehicle components behind the vehicle engine. It may also make it possible to reduce the load on the engine's conventional cooling system comprising an energy-absorbing fan.

According to the invention, the duct has a flow cross-section which increases towards the region behind the vehicle engine. This makes it possible for suction to be created in the duct in order to lead cooling outside air into the region behind the vehicle engine.

The inlet aperture may be provided at an upper portion of a mudguard or air deflector, in which case there is no need for any portion of the duct to be in contact with the resilient cab.

The upper portion of the mudguard may comprise a vertical flange for shielding a space between a chassis and the cab. The face that such a flange is often already part of the existing mudguard configuration may simplify implementation of the cooling device.

The inlet aperture may also be arranged in the cab's lower edge or rear edge if the duct is mounted firmly on the cab.

The inlet aperture may have an aperture cross-section which is parallel with a longitudinal side of the vehicle. This may be the case if the pressure behind the engine when the vehicle is in motion is less than at the outside of the vehicle.

For better effectiveness, the aperture cross-section may face away from the vehicle's direction of movement in order to use the draught created by its movement to force outside air into the duct. Otherwise the aperture cross-section may face towards the direction of movement.

The inlet aperture may have an aerodynamic configuration, e.g. a gill aperture or NACA aperture, for the sake of greater effectiveness.

Other features and advantages of the invention may be indicated by the claims and following description of embodiment examples.

### BRIEF DESCRIPTION OF THE DRAWINGS

FIG. 1 is a schematic sideview, with portions cut away, of a truck provided with a cooling device according to the invention;
FIG. 2 is a view from above corresponding to FIG. 1;
FIG. 3 is a schematic cross-sectional view of a truck chassis along the line 3-3 in FIG. 1; and
FIG. 4 is a perspective view as seen from the rear, with portions cut away, of a truck provided with a cooling device according to the invention.

### DETAILED DESCRIPTION OF EMBODIMENT EXAMPLES

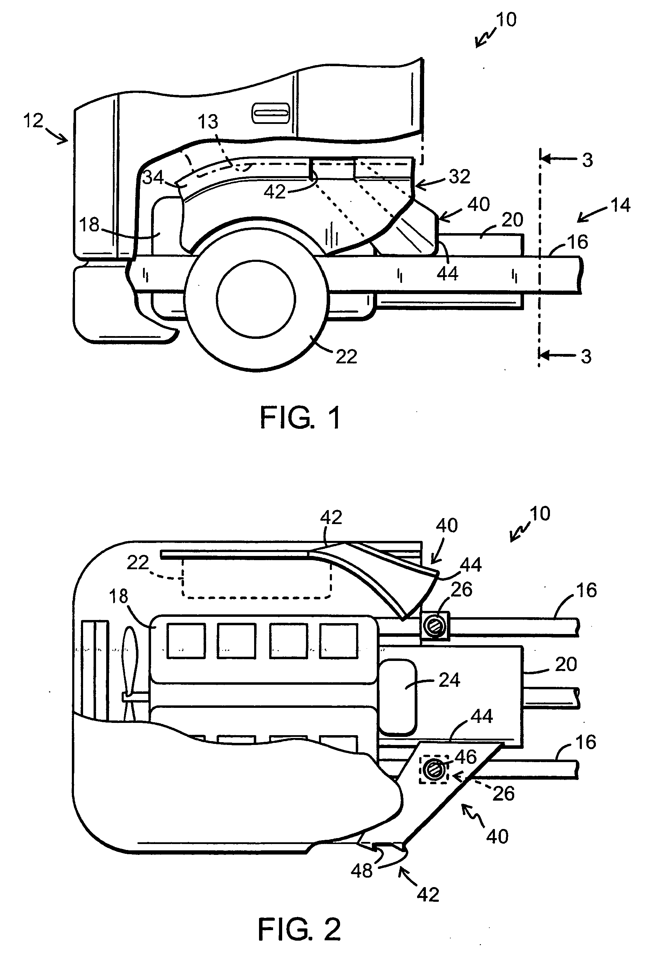

The schematic depiction in FIGS. 1 and 2 is of a rear portion of a truck 10 with a chassis 14. The chassis 14 has a pair of longitudinal frame members 16 forming part of a frame structure to which a cab 12, an engine 18, a gearbox 20 and a pair of vehicle wheels 22 are fitted in a manner not depicted in more detail. The engine 18 may also have a turbo unit 24 (FIG. 2).

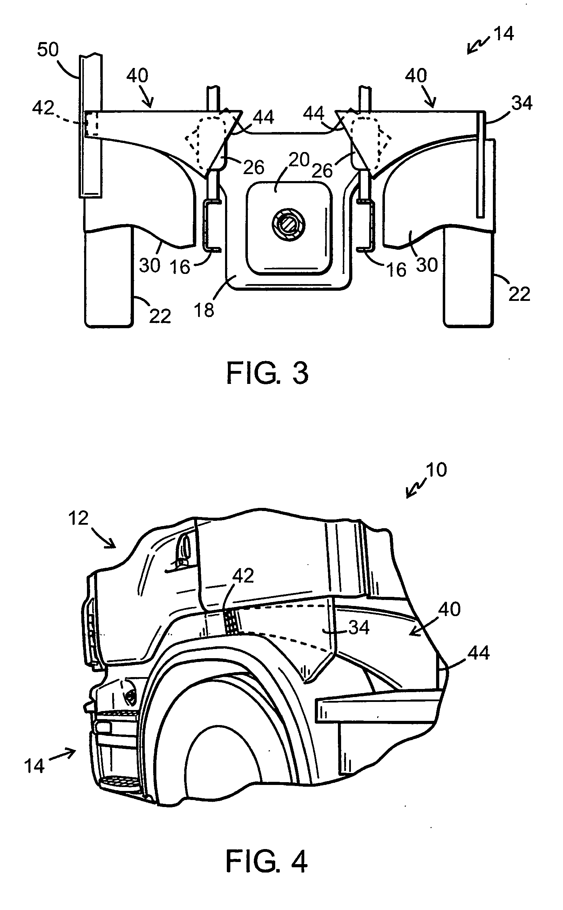

The frame structure of the chassis 14 also supports in a manner not depicted in more detail a pair of mudguards 30 (FIG. 3) which each have at their outside a side panel 32 (FIG. 1). Each side panel 32 usually constitutes a lower extension of the associated outside of the cab 12 which is resiliently suspended relative to the chassis 14. In the example depicted, each side panel 32 has at its upper side a flange 34, a so-called "cockscomb", protruding upwards within the lower edge 13 of the cab 12 (FIG. 1). The height of the flange 34 is such that it always overlaps the cab 12, i.e. its upper edge is always higher than the lower edge 13 of the resilient cab 12, in order to provide shielding relative to the interior space of the vehicle 10.

According to the invention, a duct 40 is provided to lead outside air in from an inlet aperture 42 at the outside of the vehicle 10 to an outlet aperture 44 at a region behind the engine 18. In the examples depicted, the duct 40 extends obliquely rearwards and downwards from the inlet aperture 42 to the region behind the engine 18. Although it may in some cases be sufficient to provide only one duct 40, the examples depicted have a duct 40 on each side of the vehicle 14.

The duct 40 may take the form of a shell structure made of, for example, plastic and its underside may in a suitable undepicted manner be supported by and connected to adjoining mudguards 30 (FIG. 3) and possibly also to adjoining frame members 16. However, the duct 40 may also be fitted to the underside of the cab. The left side of FIG. 3 also shows how the inlet aperture 42 of the duct 40 may be arranged in an air deflector 50.

The duct 40 also has an increasing flow cross-section towards its orifice to the region behind the engine 18. This makes possible the formation of a negative pressure in the flow direction in the duct 40, thereby making it possible to draw outside air in from the inlet aperture 42 to the region behind the engine 18.

As illustrated in the various drawings, the inlet aperture 42 may be accommodated in the flange 34 protruding upwards from the side panel 32. Depending on the pressure difference between the inlet aperture 42 and the outlet aperture 44 during operation, the aperture cross-section of the inlet aperture 42 may be oriented in various ways. If the pressure at the outlet aperture 44 is substantially less than the pressure at the inlet aperture 42, the aperture cross-section of the inlet aperture 42 may be oriented in the same plane as the upwardly protruding flange 34, as illustrated in FIG. 1. In that case the inlet aperture 42 may possibly be provided with gill apertures 48 directed rearwards (FIG. 2). If in the opposite case it is necessary for outside air to be forced into the duct 40 when the vehicle is in motion, the cross-section of the inlet aperture 42 may, as illustrated in FIGS. 2 and 4, face more or less towards or away from the direction of movement of the vehicle. The inlet aperture 42 may also have a grille to prevent foreign objects from entering the duct 40.

The outlet aperture 44 of the duct 40 may be positioned in various ways close to the region behind the engine 18. As illustrated on the upper duct 40 in FIG. 2, the outlet aperture 44 may end obliquely ahead of a rear cab suspension 26. As illustrated on the lower duct 40 in FIG. 2, the outlet aperture 44 may also be arranged downstream of the rear cab suspension 26. Components of the cab suspension 26 may then extend through apertures 46 (only one is depicted) in the duct 40. In cases where heat-sensitive components of the cab suspension 26, such as an undepicted rubber bellows, are then situated outside, e.g. above, the duct 40, the duct 40 may in an undepicted manner be adapted, e.g. be branched, in order to provide these components also with cooling outside air.

The invention may be varied in many different ways. For example, the duct 42 may be provided with various known flow arrangements for improving the cooling air flow. It is at least conceivable to also provide a fan in the duct.

## Claims

1. A device for cooling a region behind a vehicle engine (18) below or adjacent to a rear side of the cab (12) of a truck (10), whereby a duct (40) for leading outside air into said region, which duct extends rearwards and inwards to an outlet aperture (44) at said region from an inlet aperture (42) at one side of the vehicle and **characterised by** the duct (40) which has a flow cross-section increasing towards said region.

2. A device according to claim 1, in which the inlet aperture is arranged at an upper portion of a mudguard (30).

3. A device according to claim 2, in which the upper portion comprises a vertical flange (34) for shielding a space between a chassis (14) and the cab (12).

4. A device according to any one of the foregoing claims, in which the duct (40) is arranged at the underside of the cab.

5. A device according to claim 1, in which the inlet aperture is arranged adjacent to an air deflector (50).

6. A device according to any one of the foregoing claims, in which the inlet aperture (42) has an aperture cross-section which is parallel with a longitudinal side of the vehicle (10).

7. A device according to any one of claims 1-6, in which the inlet aperture (42) has an aperture cross-section which faces away from a direction of movement of the vehicle (10).

8. A device according to any one of claims 1-6, in which the inlet aperture (42) has an aperture cross-section which faces towards a direction of movement of the vehicle (10).

## Patentansprüche

1. Vorrichtung zum Kühlen eines Bereichs hinter einem Fahrzeugmotor (18) unterhalb oder neben der Rückseite des Fahrerhauses (12) eines Lastwagens (10), wobei ein Kanal (40) Umgebungsluft in diesen Bereich führt und der Kanal sich von einer Einlassöffnung (42) auf einer Seite des Fahrzeugs nach hinten und nach innen zu einer Auslassöffnung (44) in dem Bereich erstreckt,
**dadurch gekennzeichnet, dass** der Fließquerschnitt des Kanals (40) in Richtung des besagten Bereiches zunimmt.

2. Vorrichtung nach Anspruch 1, bei der die Einlassöffnung in einem oberen Teil eines Kotflügels (30) angeordnet ist.

3. Vorrichtung nach Anspruch 2, bei dem der obere Teil einen vertikalen Flansch (34) zum Abschirmen eines Raums zwischen dem Fahrgestell (14) und dem Fahrerhaus (12) umfasst.

4. Vorrichtung nach einem der vorhergehenden Ansprüche, bei der der Kanal (40) an der Unterseite des Fahrerhauses angeordnet ist.

5. Vorrichtung nach Anspruch 1, bei der die Einlassöffnung neben einer Luftleiteinrichtung (50) angeordnet ist.

6. Vorrichtung nach einem der vorhergehenden Ansprüche, bei der die Einlassöffnung einen Öffnungsquerschnitt aufweist, der parallel zu einer Längsseite des Fahrzeugs (10) ist.

7. Vorrichtung nach einem der Ansprüche 1 bis 6, bei der die Einlassöffnung (42) einen Öffnungsquerschnitt aufweist, der von einer Bewegungsrichtung des Fahrzeugs weg gerichtet ist.

8. Vorrichtung nach einem der Ansprüche 1 bis 6, bei der die Einlassöffnung (42) einen Öffnungsquerschnitt aufweist, der in Richtung einer Bewegungsrichtung des Fahrzeugs gerichtet ist.

## Revendications

1. Dispositif pour refroidir une région derrière un moteur de véhicule (18) en dessous ou au voisinage d'un côté arrière d'une cabine (12) d'un camion (10), dans lequel un conduit (40) sert à amener de l'air extérieur dans ladite région, ce conduit s'étendant vers l'arrière et vers l'intérieur jusqu'à une ouverture de sortie (44) dans ladite région à partir d'une ouverture d'entrée (42) d'un côté du véhicule, et **caractérisé en ce que** le conduit (40) a une section transversale d'écoulement qui augmente vers ladite région.

2. Dispositif selon la revendication 1, dans lequel l'ouverture d'entrée est disposée dans une partie supérieure d'un garde-boue (30).

3. Dispositif selon la revendication 2, dans lequel la partie supérieure comprend un flasque vertical (34) pour protéger un espace entre un châssis (14) et la cabine (12).

4. Dispositif selon l'une quelconque des revendications précédentes, dans lequel le conduit (40) est disposé du côté inférieur de la cabine.

5. Dispositif selon la revendication 1, dans lequel l'ouverture d'entrée est située au voisinage d'un déflecteur d'air (50).

6. Dispositif selon l'une quelconque des revendications précédentes, dans lequel l'ouverture d'entrée (42) a une section transversale d'ouverture qui est parallèle à un côté longitudinal du véhicule (10).

7. Dispositif selon l'une quelconque des revendications 1 à 6, dans lequel l'ouverture d'entrée (42) a une section transversale d'ouverture qui est dirigée de façon à s'éloigner d'une direction de déplacement du véhicule (10).

8. Dispositif selon l'une quelconque des revendications 1 à 6, dans lequel l'ouverture d'entrée (42) a une section transversale d'ouverture qui est dirigée vers une direction de déplacement du véhicule (10).
